# EUROPEAN PATENT SPECIFICATION

(11) **EP 0 821 046 B1**
(45) Date of publication and mention of the grant of the patent: **21.04.2004**
(21) Application number: 97902591.3
(22) Date of filing: 06.02.1997
(51) Int. Cl.: C09K 5/04, F25B 13/00

(54) **REFRIGERANT CYCLE PLANT WITH DIFLUOROMETHANE/HYDROCARBON REFRIGERANT MIXTURE**
ANLAGE MIT KÜHLKREISLAUF MIT DIFLUORMETHAN/KOHLENWASSERSTOFF-KÜHLMITTELMISCHUNG
INSTALLATION DE CYCLE DE REFRIGERATION AVEC MELANGE REFRIGERANT A BASE DE DIFLUOROMETHANE/HYDROCARBURE

(30) Priority: 07.02.1996 JP 2086596
(43) Date of publication of application: 28.01.1998
(73) Proprietor: MATSUSHITA ELECTRIC INDUSTRIAL CO., LTD., Kadoma-shi, Osaka 571-8501 (JP)
(72) Inventor: YOSHIDA, Yuji, Itami-shi, Hyogo 664 (JP); FUNAKURA, Masami, Neyagawa-shi, Osaka 572 (JP); MATSUO, Mitsuharu, Hirakata-shi, Osaka 570 (JP); OKAZA, Noriho, Tsuzuki-gun, Kyoto 610-03 (JP)
(74) Representative: Kügele, Bernhard
(86) International application number: PCT/JP1997/000286
(87) International publication number: WO 1997/029162

(56) References cited:
- WO-A-94/09082
- WO-A-95/16757
- WO-A-95/24451

## Description

### Technical Field

This invention relates to difluoromethane and hydrocarbon mixed refrigerant forming an azeotropic-like mixture, and refrigerating systems such as air-conditioners and refrigerators employing this.

### Background Arts

Conventionally, a refrigerating system such as the air-conditioner and refrigerator consists of a compressor, a four-way valve if necessary, a condenser, a throttle valve such as the capillary tube and the expansion valve, an evaporator, an accumulator and others connected together with pipes, performing its cooling or heating function by circulating a refrigerant within this system.

In this refrigerating system, the employment of halogenated hydrocarbon called Freon (hereinafter, expressed by ROO or ROOO) derived from methane or ethane as its refrigerant have been well known.

One of the refrigerants is normally operated at a condensing temperature of about 50°C and an evaporating temperature at about 0°C in these air-conditioners and refrigerators, and among this, chlorodifluoromethane (CHCIF₂ or R22, boiling point of -40.8°C) has been extensively used as the refrigerant. However, after the stratospheric ozone depletion action of R22 became widely known, the regulations of both the volume of usage and the production of R22 have been proclaimed by the Montreal International Protocol, and furthermore, both the use and the production of R22 are in a tend to be abolished in future. Meanwhile, in order to minimize the ill-effects of R22 to the stratospheric ozone layer, the exclusion of chlorine from its molecular structure is now considered indispensable. Therefore, the development of fluorohydrocarbon excluding the chlorine satisfying the above-mentioned condition had been proposed.

Thus, in performance of the refrigerating systems such as air-conditioners and refrigerators, difluoromethane (CH₂F₂, R32, boiling point of -51.7°C) without containing chlorine had been considered as one of the possible refrigerants in air-conditioners and refrigerants substituting the chlorodifluoromethane (CHClF₂, R22, boiling point of -40.8°C).

According to the global warming potential (hereinafter, abbreviated as GWP) showing the another environmental problem reported by IPCC (Inter-governmental Panel on Climate Change), GWP of R22 is 1700 specifying the integration time horizon of GWP of CO₂ at 1, while the GWP of difluoromethane (R32) is 580, the use of difluoromethane (R32) is advantageous reducing the effect on the global warming potential in one third of R22.

However, beside its weak flammability, difluoromethane (R32) is disadvantageous because of its low solubility with the mineral oil or a type of synthetic oil used as a lubricating oil. This may cause a poor feedback of the lubricating oil discharged from the compressor together with the refrigerant to the compressor from the evaporator kept at a low temperature. Therefore, the employment of ester oil having a good solubility as the lubricating oil of compressor is recommended when the difluoromethane (R32) is used as a refrigerant. However, because of its easy hydrolysis of ester oil, its stability in use as a chemical material has to be observed carefully.

This invention is made to solve the above-described problem by using difluoromethane (R32) which has very little influence to the stratospheric ozone layer and has the possibility to decrease the influence to the global warming with the conventional compressor lubricating oil.

According to this invention, mixed refrigerants containing at least a type of hydrocarbon selected from the hydrocarbon family forming an azeotropic-like mixture with difluoromethane (R32), having very little influences to the stratospheric ozone layer and to the global warming, are proposed. Since the hydrocarbon has a chemical structure close to the mineral oil or the synthetic oil other than ester oil, it is possible to use this with the conventional compressor lubricating oil other than ester oil.

### Disclosure of the Invention

In order to solve the above-described problems, a mixed refrigerant comprising difluoromethane (R32) of from 80 to less than 100 weight % and at least an hydrocarbon producing an azeotropic-like mixture with difluoromethane (R32) wherein the range of composition of difluoromethane is specified from the azeotropic-like composition having the lower boiling point than that of difluoromethane to the difluoromethane having a weight percent ratio of less than 100 is used. In here, a type of hydrocarbon forming an azeotropic-like mixture with difluoromethane (R32) can be selected out of : cyclopropane (C₃H₆, RC270, boiling point -32.9°C ) or isobutane (i-C₄H₈, R600a, boiling point -11.7°C), or butane (n-C₄H₈, R600, boiling point -0.5°C).

### Brief Description of The Drawings

Figure 1 shows a plot of the boiling points and the dew points of a refrigerant consisted of difluoromethane (R32) and cyclopropane (RC270) mixed at a various ratio.
Figure 2 shows an embodiment of the refrigerating system employing the invented mixed refrigerant.

### Preferred Embodiments

The present invention shows that difluoromethane (R32) and a type of refrigerant selected out of cyclopropane (RC270), isobutane (R600a), or butane (R600) becomes an azeotropic-like mixture having a lower boiling point than that of difluoromethane (R32) at a composition of more than about 80 weight % of difluoromethane (R32).

Since the composition of such azeotropic-like mixture consists of from 80 to less that 100 weight % difluoromethane (R32), the range of possible composition of difluoromethane (R32) from that of azeotropic-like mixture having a lower boiling point than R32 to that of R32 having a weight percent ratio of less than 100 can be considered nearly same as the ratio of composition between the difluoromethane (R32) and the hydrocarbon forming an azeotropic-like mixture in the liquid and the vapor phase.

By employing the above-mentioned combinations, this refrigerant can be transformed into the invented mixed refrigerant containing difluoromethane (R32) excluding chlorine and either of cyclopropane (RC270), isobutane (R600a) or butane (R600) having very little effects on the stratospheric ozone layer and on the ODP.

Furthermore, since these refrigerants consists of difluoroethane (R32) having GWP far less than that of R22 and hydrocarbons having nearly zero GWP, the effect of the mixed refrigerant on the global warming potential would be far less than R22.

Moreover, since the composition of mixed refrigerant consisted of difluoromethane (R32) and hydrocarbon is limited to form an azeotropic-like mixture, the mixing ratio of difluoromethane (R32) and hydrocarbon within the constituting elements of refrigerating system can be kept at a nearly same, this mixed refrigerant can be used with the compressor lubricating oil other than ester oil in the normal refrigerating system by utilizing the mutual solubility of the hydrocarbon and the oil other than ester oil.

As for the lubricating oil for compressor, not only the conventional mineral oil and the alkyl-benzene oil but the lubricating oils such as the ether type oil, fluorine type oil, etc. which should be free of hydrolysis can be used.

Moreover, the present invention is to offer a refrigerant having a refrigerating capacity and a coefficient of performance higher than those of R32 and having a coefficient of performance equal to that of R22 by mixing the difluoromethane (R32) having a boiling point lower than that of R22 with cyclopropane (RC270), isobutane (R600a), or butane (R600) having a boiling point higher than that of R22, and by specifying its composition in a range forming its azeotropic-like mixture having a lower boiling point than that of R32.

A more compact refrigerating system can be obtained by operating this refrigerating system with R22 refrigerant yielding a higher refrigerating capacity and an equal coefficient of performance in a normal operating temperature range from about 0° to about 50°.

Moreover, the anti-explosion means possible to the cases of R32 single refrigerant could be employed because a very little change in the mixing ratio between the flammable R32 and the hydrocarbon could be produced even when R32 and hydrocarbon were leaked from the refrigerating system by limiting the composition ratio of hydrocarbon in such a mixed material in a minimum improving the solubility of difluoromethane (R32) into the compressor lubricating oil for the safety.

In addition to this, the above-mentioned azeptropic-like mixture can be used not only as a refrigerant of refrigerating system but as a propellant agent, foaming agent, and others.

### [Embodiment-1]

Table 1 shows plots of the boiling points of mixed refrigerants consisted of difluoromethane (CH₂F₂, R32, boiling point -51.7 °) and cyclopropane (C₃H₆, RC270, boiling point -32.9°) at the atmospheric pressure.

Whereas these two kinds of refrigerants R32 and RC270 are provided with boiling points lower than those of single refrigerants at a composition of about 80 weight % and about 20 weight % of R32 and RC270 having a composition of azeotropic mixture having the lowest boiling point.

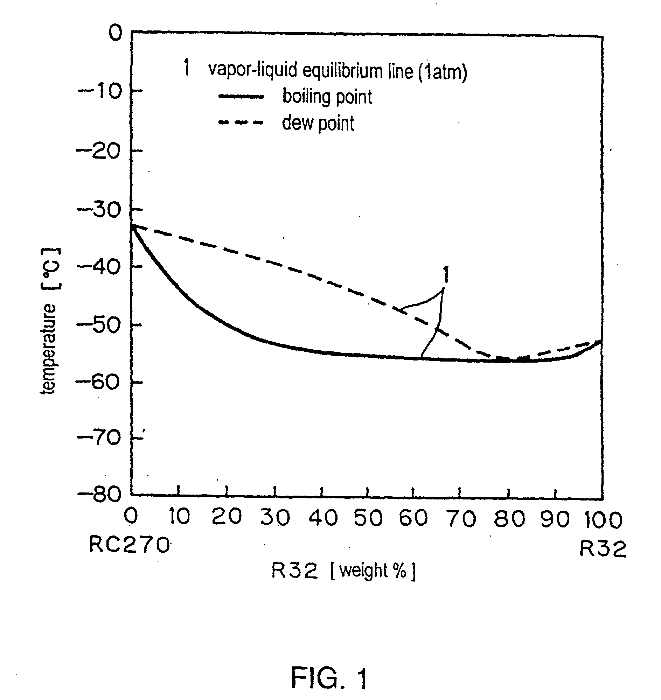

Fig. 1 shows a vapor-liquid equilibrium line 1 (boiling point and dew point) of a refrigerant consisted of the mixture of difluoromethane (R32) and cyclopropane (RC270) at the atmospheric pressure derived from the boiling points shown in Table 1.

The mixed refrigerant containing difluoromethane (R32) as an azeotropic-like mixture from 80 weight % to less than 100 weight % can be considered nearly same as a composition of R32 and RC270 in a liquid and a vapor phase respectively. Thus, the mixing ratio of R32 and RC270 in the constituting elements of refrigerating system would be desirably kept nearly constant in a composition range wherein R32 and RC270 consists of 80 to less than 100 weight % and more than 0 to 20 weight % respectively.

**Table 1**

| R32/RC270 (weight %) | Saturation Temperature (°C) |
|---|---|
| 0 / 100 | -32.9 |
| 50 / 50 | -44.5 |
| 70 / 30 | -51.9 |
| 75 / 25 | -54.1 |
| 80 / 20 | -55.1 |
| 85 / 15 | -54.4 |
| 90 / 10 | -53.5 |
| 95 / 5 | -52.6 |
| 100 / 0 | -51.7 |

### [Embodiment-2]

Table 2 shows a relationship between the mixing ratio and the refrigerating performances of binary refrigerant mixture consisting of difluoromethane (R32) and cyclopropane (RC270).

**Table 2**

| Refrigerants | R32 / RC270 | | | | |
|---|---|---|---|---|---|
| Composition (wt%) | 0/100 | 70/30 | 80/20 | 90/10 | 100/0 |
| Refrigerating capacity (over R22) | 0.753 | 1.539 | 1.644 | 1.686 | 1.621 |
| Coefficient of performance (over R22) | 1.065 | 0.968 | 0.961 | 0.962 | 0.949 |
| Condensing pressure (MPa) | 1.346 | 2.954 | 3.133 | 3.206 | 3.143 |
| Evaporating pressure (Mpa) | 0.353 | 0.808 | 0.862 | 0.862 | 0.813 |
| Discharge temperature (°C) | 67.7 | 84.2 | 85.3 | 88.8 | 89.4 |
| Condensing temperature gradient (deg) | 0.00 | 3.06 | 0.72 | 0.00 | 0.00 |
| Evaporating temperature gradient (deg) | 0.00 | 2.98 | 0.26 | 0.16 | 0.00 |

In here, the conditions of this refrigerating system are: the average condensing temperature is 50°C, the average evaporating temperature is 0°C, the subcooling temperature at the outlet of condenser is 0 deg, and the superheated temperature at the outlet of evaporator is 0 deg. As seen from Table 2, the azeotropic compositions of R32 and RC270 constituting an azeotropic mixture at a composition ratio of about 80 weight % and about 20 weight % respectively at a temperature near about -55°C at the atmospheric pressure are shifted to a composition ratio of higher R32 at a higher temperature of 0°C or 50°C. However, in the binary refrigerant mixture consisted of about 90 weight % of R32 and about 10 weight % of RC270, both the evaporating pressure and the condensing pressure are higher than those of single R32 and RC270 refrigerants, and the refrigerating capacity and the performance coefficient of the mixture are larger than those of single R32 refrigerant and the discharge temperature is smaller than that of single R32 refrigerant.

Moreover, since the refrigerant capacity of binary refrigerant mixture consisting of 80 to less than 100 weight % of R32 and more than 0 to 20 weight % of RC270 is higher than that of R32 having a same coefficient of performance, the present refrigerating system can be made in a more compact geometrical size by employing this mixed refrigerant. Moreover, since the temperature gradient in the condensing process and the evaporating process are less than 1 deg, this azeotropic-like mixture can be handled like a single system refrigerant. Thus, this mixture is particularly suited to a refrigerating system and an air-conditioner in which the Lorentz cycle is hard to establish in using an air heat exchanger to condensors or evaporators.

### [Embodiment-3]

**Table 3**

| R32/R600a (weight %) | Saturation Temperature (°C) |
|---|---|
| 0 / 100 | -11.7 |
| 50 / 50 | -51.6 |
| 70 / 30 | -52.3 |
| 75 / 25 | -52.4 |
| 80 / 20 | -52.5 |
| 85 / 15 | -52.6 |
| 90 / 10 | -52.7 |
| 95 / 5 | -52.6 |
| 100 / 0 | -51.7 |

Table 3 shows a shift of the boiling point of mixed refrigerant when the mixing ratio of difluoromethane (CH₂F₂, R32, boiling point -51.7°) and isobutane (i-C₄H₈, R600a, boiling point -11.7°) is changed at the atmospheric pressure.

The boiling points of a mixed refrigerant consisted of two kinds of refrigerants, R32 and R600a, are lower than those of single R32 and R600a refrigerants when those are mixed at a composition ratio of 90 weight % and 10 weight % respectively yielding an azeotropic mixture having the lowest boiling point. Thus, in a composition range where R32 and R600a constitute 90 to less than 100 weight % and more than 0 to 10 weight % respectively, the mixing ratio of R32 and R600a included in the entire constituting elements of the refrigerating system can be equalized at the same, and this is highly desirable.

### [Embodiment-4]

Table 4 shows refrigerating performances of binary refrigerant mixture consisted of difluoromethane (R32) and isobutane (R600a) under a condition same as the one shown in Table 2.

**Table 4**

| Refrigerants | R32 / R600a | | | | |
|---|---|---|---|---|---|
| Composition (wt%) | 0/100 | 70/30 | 80/20 | 90/10 | 100/0 |
| Refrigerating capacity (over R22) | 0.331 | 1.220 | 1.401 | 1.604 | 1.621 |
| Coefficient of performance (over R22) | 1.011 | 0.988 | 0.972 | 0.991 | 0.949 |
| Condensing pressure (MPa) | 0.684 | 2.407 | 2.737 | 3.013 | 3.143 |
| Evaporation pressure (MPa) | 0.156 | 0.602 | 0.706 | 0.803 | 0.813 |
| Discharge temperature (°C) | 50.0 | 55.8 | 82.8 | 84.7 | 89.4 |
| Condensing temperature gradient (deg) | 0.00 | 11.50 | 5.34 | 1.08 | 0.00 |
| Evaporating temperature gradient (deg) | 0.00 | 12.90 | 6.27 | 0.48 | 0.00 |

As seen from Table 4, since this binary refrigerant consisting of 90 to less than 100 weight % of R32 and more than 0 to 10 weight % of R600a shows a refrigerating capacity higher than that of R22 and a nearly equal coefficient of performance with that of R22, a more compact refrigerating system can be obtained by employing this refrigerant.

Moreover, since the temperature gradients in the condensing process and the evaporating process are less than about 1 deg, this azeotropic-like mixture can be handled as if this were a refrigerant of single composition, and this is most suitable to refrigerating systems such as the air-conditioners and refrigerators in which the Lorenz cycle is difficult to establish by using an air heat exchanger to condensers or evaporators.

### [Embodiment-5]

Table 5 shows a shift of boiling points of a mixed refrigerant consisted of difluoromethane (CH₂F₂, R32, boiling point -51.7°) and butane (n-C₄H₈, R600, boiling point -0.5°) in the atmospheric pressure when the mixing ratio of this refrigerants is changed.

**Table 5**

| R32/R600 (weight %) | Saturation Temperature (°C) |
|---|---|
| 0 /100 | - 0.5 |
| 50 / 50 | -50.5 |
| 70 / 30 | -51.2 |
| 75 / 25 | -51.3 |
| 80 / 20 | -51.4 |
| 85 / 15 | -51.5 |
| 90 / 10 | -51.7 |
| 95 / 5 | -51.8 |
| 100 / 0 | -51.7 |

The mixed refrigerant consisted of R32 and R600 has a boiling point lower than that of single refrigerants of R32 and R600 at a composition of about 95 weight % of R32 and about 5 weight % of R600, and becomes to an azeotropic mixture having a lowest boiling point. Therefore, in a range of composition consisted of 95 to less than 100 weight % of R32 and more than 0 to 5 weight % of R600, the mixing ratio of R32 and R600 in the entire constituting elements of the refrigerating system can be made equal and this is desirable.

### [Embodiment-6]

Table 6 shows refrigerating performances of the binary refrigerant mixture consisted of difluoromethane (R32) and butane (R600) prepared under a condition same as the one shown in Table 2.

**Table 6**

| Refrigerants | R32 / R600 | | | | |
|---|---|---|---|---|---|
| Composition (wt%) | 0/100 | 70/30 | 80/20 | 90/10 | 100/0 |
| Refrigerating capacity (over R22) | 0.244 | 1.083 | 1.256 | 1.525 | 1.621 |
| Coefficient of performance (over R22) | 1.042 | 1.006 | 0.969 | 0.984 | 0.949 |
| Condensing pressure (MPa) | 0.497 | 2.120 | 2.502 | 2.895 | 3.143 |
| Evaporation pressure (MPa) | 0.103 | 0.499 | 0.603 | 0.747 | 0.813 |
| Evaporation pressure (MPa) | | | | | |
| Discharge temperature (°C) | 50.0 | 85.7 | 88.0 | 87.2 | 89.4 |
| Condensing temperature gradient (deg) | 0.00 | 19.00 | 10.38 | 2.84 | 0.00 |
| Evaporating temperature gradient (deg) | 0.00 | 21.10 | 13.18 | 3.08 | 0.00 |

Although no explanations are made in Table 6, since this binary refrigerant mixture consisted of 95 to less than 100 weight % of R32 and more than 0 to 5 weight % of R600 has a refrigerating capacity higher than that of R22 and a coefficient of performance equal to that of R22, a considerable geometrical reduction of the refrigerating system size is possible by employing this mixed refrigerant. Furthermore, since this is an azeotropic-like mixture, this can be handled as if it were a single composition refrigerant suitable to refrigerating systems such as the air-conditioners and the refrigerators in which the Lorentz cycle is difficult to establish.

### [Embodiment-7]

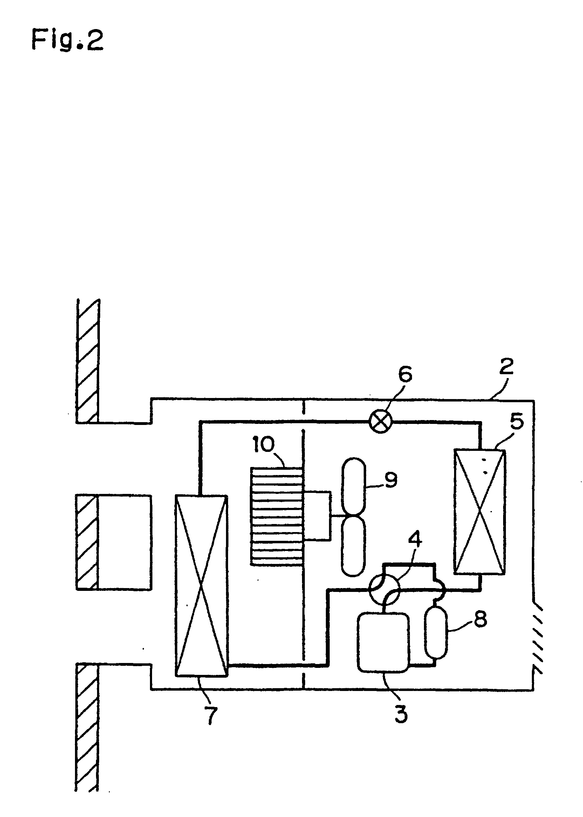

Figure 2 shows an embodiment of the outdoor-installed refrigerating system such as that of the air-conditioner. As shown in Fig. 2, this consists of compressor 3, four-way valve 4, outdoor heat exchanger 5 acting as a condenser or an evaporator, throttle valve 6 made of a capillary tube or an expansion valve, indoor heat exchanger 7 acting as an evaporator or a condenser, and an accumulator 8, and others are disposed within casing 2 and are connected by pipe lines. By using an outdoor fan 9 connected to an outdoor and indoor common motor, outdoor heat exchanger 5 is operated in order to exchange the heat of air in the outside, and the indoor heat exchanger 7 is operated by an indoor fan 10 in order to exchange the heat of air in the inside. A mixed refrigerant consisted of difluoroethane (R32) and cyclopropane (RC270) and a lubrication oil other than ester oil are sealed in this refrigerating system. When refrigerants R32 and RC270 are circulated within the refrigerating system, and the indoor heat exchanger 7 is acted as an evaporator, a cooling action is performed, while the indoor heat exchanger 7 is acted as a condensor, a heating action is performed. In this case, back-flow of refrigerant to the compressor 3 may take place during the heating operation and a phase separation of the vapor phase and the liquid phase in the accumulator 8 may take place.

Since the mixing ratio of RC270 in the liquid phase would be the same as the filling composition producing an azeotropic-like mixture having a lower boiling point than that of R32 even when a phase separation between the vapor phase and the liquid phase were taken place in the accumulator 8 in the binary mixed refrigerant wherein R32 occupies 80 to less than 100 weight % and RC270 occupies more than 0 to 20 weight % respectively, by utilizing the mutual solubility of RC270 and the lubricating oil other than ester oil, the return of lubricating oil exhausted from compressor 3 together with the refrigerant from the low-temperature accumulator 8 to the compressor 3 could be guaranteed.

Moreover, even when the lubricating oil other than ester oil staying mainly in compressor 3 becomes high temperature and a small amount of water were included in the refrigerant, no hydrolysis like ester oil can be produced, and the mixed refrigerant consisted of R32 and RC 270 as it is can be used in the conventional refrigerating system together with the conventional compressor lubricating oil other than ester oil. As for the compressor lubricating oil, not only the conventional mineral oil and alkyl-benzene oil, but the ether type oil and fluorine type oil hard to produce hydrolysis can be used. Since the binary mixed refrigerant such as the one consisted of 80 to less than 100 weight % of R32 and more than 0 to 20 weight % of RC270 has an equal coefficient of performance and a superior refrigerating capacity, the more compact refrigerating system can be produced by employing the compressor 3 of smaller cylinder volume, and by employing the smaller outdoor heat exchanger 5 and the smaller indoor heat exchanger 7 than those of the presently used refrigerating system employing R22.

Moreover, even when the leakage of flammable R32 and RC270 were taken place, the mixture of leaked R32 and RC270 produces an azeotropic-like mixture and produces very little changes in the mixing ratio, so anti-explosion means same as the one taken for a refrigerant of single composition can be taken for the mixed refrigerant. Moreover, when the mixed refrigerant consisted of isobutane (R600a) or butane (R600) instead of cyclopropane (R270) were introduced the nearly same effect can be expectable.

### Industrial Applications

As shown in the above-explanations, this invention is to employ a mixed refrigerant containing difluoromethane and hydrocarbon forming an azeotropic-like mixture with difluoromethane selected from one of cyclopropane, isobutane and butane, and the effect can be obtained by using a refrigerant consisting of a mixture of only the compound excluding the chlorine from its molecular structure, and the below shown effect can be obtained by specifying the range of its composition.
(1) The selection range of refrigerants virtually free of the ill-effects on the stratospheric ozone layer can be widened.
(2) Since the above-mentioned refrigerant consists of difluromethane having far less global warming potential than R22 and hydrocarbons having very little global warming potential, the refrigerant derived by mixing these would have far less effects on global warming than R22.
3) By limiting the composition of the mixture of difluromethane and hydrocarbon within an azeotropic-like mixture, this refrigerant can be used as it is in the conventional refrigerating system together with the conventional compressor lubricating oil other than ester oil.
(4) Since the mixed refrigerant consisted of difluromethane and hydrocarbon whose range of composition is specified has a vapor pressure higher than that of R32 in the operating temperature range from about 0 to about 50ºC, and having a refrigerating capacity higher than R22 and a nearly equal coefficient of performance, the present refrigerating system using this mixed refrigerant can be made in a more compact size.
(5) Even when the leakage of flammable difluromethane and hydrocarbon out of the refrigerating system were taken place, the anti-explosion means same as the one taken for a refrigerant of single composition can be taken for the mixed refrigerant specified to make an azeotropic-like mixture.
(6) This azeotropic-like mixture can be used not only as a refrigerant in the refrigerating system but can be used as a propellant, forming agent, etc.

## Claims

1. A refrigerating system with a lubricating oil for compressor other than ester oil employing a mixed refrigerant comprising of difluoromethane of from 80 to less than 100 weight % and a hydrocarbon producing an azeotropic-like mixture wherein the range of composition of difluoromethane is specified from the azeotropic-like composition having the lower boiling point than that of difluoromethane to the difluoromethane having a weight percent ratio of less than 100.

2. A refrigerating system according to claim 1, wherein the difluoromethane having a weight percent ratio from 80 to less than 100 and a hydrocarbon selected from the group consisting of cyclopropane having a weight percent ratio less than 20, isobutane having a weight percent ratio less than about 10 and butane having a weight percent ratio less than about 5 are contained.

## Patentansprüche

1. Kühlvorrichtung mit einem Schmieröl für den Kompressor mit Ausnahme von Esteröl, die eine Kühlmittelmischung verwendet, die Difluormethan von 80 bis weniger als 100 Gewichtsprozent und Kohlenwasserstoff aufweist, die eine azeotropartige Mischung ergeben, **dadurch gekennzeichnet, dass** der Zusammensetzungsbereich von Difluormethan von der azeotropartigen Mischung mit einem Siedepunkt, der unter dem von Difluormethan liegt, bis zu dem Difluormethan mit einem Gewichtsprozentverhältnis von kleiner als 100 spezifiziert wird.

2. Kühlvorrichtung nach Anspruch 1, **dadurch gekennzeichnet, dass** sie das Difluormethan mit einem Gewichtsprozentverhältnis von 80 bis weniger als 100 und Kohlenwasserstoff, der aus der Gruppe ausgewählt wird, die Cyclopropan mit einem Gewichtsprozentverhältnis von weniger als 20, Isobutan mit einem Gewichtsprozentverhältnis von weniger als 10 und Butan mit einem Gewichtsprozentverhältnis von weniger als 5 aufweist, enthält.

## Revendications

1. Système de réfrigération comportant une huile de lubrification pour un compresseur autre qu'une huile d'ester employant un réfrigérant mixte comprenant 80 à moins de 100 % en poids de difluorométhane et un hydrocarbure produisant un mélange du type azéotrope, où la plage de compositions de difluorométhane est spécifiée depuis la composition du type azéotrope présentant un point d'ébullition inférieur à celui du difluorométhane au difluorométhane présentant un rapport en pourcentage en poids inférieur à 100.

2. Système de réfrigération selon la revendication 1, dans lequel le difluorométhane présentant un rapport en pourcentage en poids de 80 à moins de 100 et un hydrocarbure sélectionné à partir du groupe constitué de cyclopropane présentant un rapport en pourcentage en poids inférieur à 20, d'isobutane présentant un rapport en pourcentage en poids inférieur à environ 10 et de butane présentant un rapport en pourcentage en poids inférieur à 5, sont compris.
